Europäisches Patentamt

European Patent Office

Office européen des brevets

(19)

(11) Publication number: 0 333 898
A1

(12) EUROPEAN PATENT APPLICATION

(21) Application number: 88104582.7

(22) Date of filing: 22.03.88

(51) Int. Cl.4: A23C 19/064 , A01J 25/00

(43) Date of publication of application:
27.09.89 Bulletin 89/39

(84) Designated Contracting States:
CH DE FR LI NL

(71) Applicant: OSRODEK
BADAWCZO-ROZWOJOWY APARATURY
MLECZARSKIEJ
ul. Okrzei 18
PL-03 710 Warszawa(PL)

(72) Inventor: Ryszkowski, Jerzy
ul.Inflancka 19 ml04
Warszawa 00-189(PL)
Inventor: Kobiela, Artur
ul. Ostrzycka 1/3 ml50
Warszawa 04-035(PL)
Inventor: Rozumowicz, Kazimierz
ul. Kolobrzeska 14D m3
Olsztyn 10-443(PL)
Inventor: Klepacki, Jerzy
ul. Plowiecka 53
Warszawa 04-501(PL)
Inventor: Soltys, Waclaw
ul. Pulawska 49
Warszawa 02-508(PL)

(74) Representative: Finck, Dieter et al
Patentanwälte v. Füner, Ebbinghaus, Finck
Mariahilfplatz 2 & 3
D-8000 München 90(DE)

(54) Method and device for salting cheese.

(57) For salting maturing cheeses with a salting time considerably shortened in industrial production cheese curds produced in a cheese curd separator (2) are separated from whey in a whey separator (3) and are directed through a curd charging hopper (5) provided with a pump (7) for pumping the cheese mass to a stream of brine having a salt concentration of 6 to 20 per cent. The curds and the brine are transported through a salting time controller (8) and a tubular heater (9), maintaining a constant temperature for a given cheese type ranging within the limits from 35° up to 90° C, to a brine separator (10) and a cheese forming unit (12). The brine pump (11) is connected to the said charging hopper (5) for return-ing the brine separated into the brine separator (10). The salting time ranges within the limits from half a minute to ten minutes depending upon the cheese type being produced.

## Method and device for salting cheese

This invention relates to a method and a device for salting cheese.

From E. Pijanowski 'Outline of Chemistry and Dairy Technology' 2nd vol., a wet salting method is known consisting of placing the cheese bricks or heads in a basin filled with brine, that is water sodium chloride solution of the required concentration and keeping them therein for a period of time from several hours up to 5 to 6 days, depending upon the cheese grade.

Also known is a device for salting cheeses in suitable basins which after having been filled with cheeses are placed in a brine tub provided with a pump which presses brine from the said basin to a brine system provided with a suitable filter. Above the said containers for salting cheeses there are spraying nozzles for spraying brine supplied by a pump from the brine tub which circulates in a closed system.

Still another cheese salting method known from 'Principles of Production of Food Milk and Its Products' by J.R. Campbell and R.T. Marshall is a dry salting method consisting in a hand or mechanical rubbing-in of salt into the cheese bricks having been formed, as well as a method comprising the addition of salt to a ground cheese mass and mixing it in suitable mixers.

It is the object of the invention to provide a method and device for uniformly salting maturing cheese using a short salting time in industrial production.

According to the inventive method of wet-salting cheese the cheese curds are separated from whey and directed to a brine stream being 6 to 20 per cent water aqueous sodium chloride solution, the temperature of said brine being constant for a given cheese type and ranging within the limits from 35 up to 90 degrees Centigrade, the period of time of maintaining the cheese curds in the brine being controlled within the limits from 0.5 to 10 minutes, the said cheese curds being next separated from the brine and formed in bricks.

This method is carried out by means of a device comprising a cheese curds separator co-acting with a whey separator and with a curd charging hopper provided with a pump for cheese mass connected via a salting time controller to a tubular heater and brine separator provided with a return hopper connected to the brine pump and a cheese forming unit, the said brine pump being connected to the said charging hopper.

Preferably, the connecting tube has branches terminating with a set of rinsing nozzles whose outlets are directed towards the whey separator sieve.

The salting of cheese according to the invention is not time-consuming and can be mechanized and automated to a large extent. Moreover, a very uniform salt distribution is ensured throughout the entire cheese volume.

The device for salting of cheese can be made for the most part from sub-assemblies and units which are well known and commonly used in the dairy industry. They require considerably less space than the devices heretofore used and do not require special salting rooms. Moreover, they can also be suited to automatic washing.

In the following an embodiment of the invention is described with the aid of a drawing showing schematically a cheese salting device.

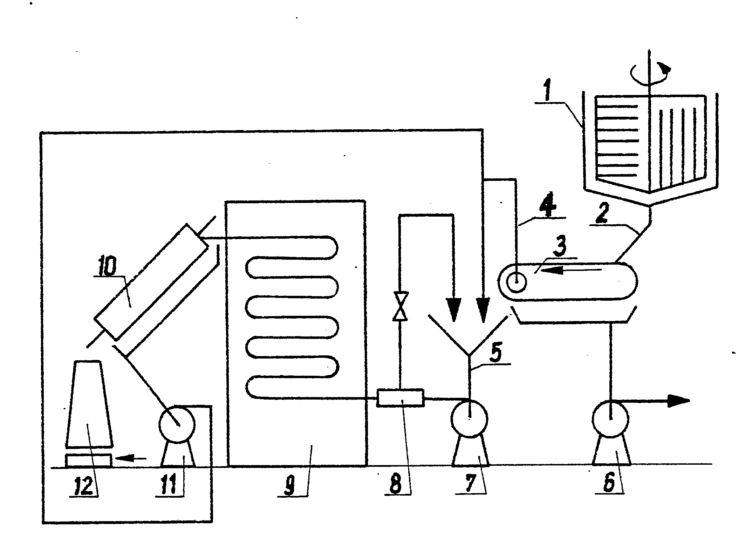

The cheese salting device shown in the drawing consists of a cheese making tank 1 with a separator 2 for separating cheese curds, co-acting with a whey separator 3 of a belt type and with a charging hopper 5, provided with a pump 7 for cheese mass connected via a salting time controller 8 to a tubular heater 9 and brine separator 10, provided with a return hopper connected in turn to a brine pump 11 and a cheese forming unit 12. The brine pump 11 is connected to the cheese curds charging hopper 5, the connecting tube having a branch terminating with a set of rinsing nozzles 4, whose outlets are situated above the bottom part of the whey separator sieve 3.

The operation of the cheese salting device consists in that the cheese mass from the cheese-making tank 1 is supplied via the curds separator 2 onto the sieve of the whey separator 3, wherefrom curds are directed by a brine stream outflowing from the said rinsing nozzles 4 into the said charging hopper 5. The pump 6 sucks the whey, whereas the pump 7 forces the brine which contains cheese curds through a salting time controller 8 making possible control of time of keeping the cheese curds in the brine and, further, is directed through the heater 9 to the brine separator 10, wherefrom brine is returned by the pump 11 to the charging hopper 3 and the set of rinsing nozzles 4. Said cheese curds being formed into cheese bricks by the cheese-forming unit 12.

The invention is further explained by the following examples.

Example 1

Cheese curds produced by a known method are separated from whey and next directed to a stream of brine circulating in a closed system, the said brine being 8 per cent aqueous sodium chloride solution having a constant temperature of 45 ± 2 degrees Centigrade for medium salted cheeses. The cheese curds were kept in the brine for 2 minutes. Next the cheese curds have been separated from the brine and formed in a traditional way, that is by filling moulds, or by a preliminary pressing in a cheese making vat.

Example 2

Cheese curds are obtained in a traditional way by separating whey and directing it to a stream of brine circulating in a closed system, being 14 per cent aqueous sodium chloride solution and having a constant temperature of 57 ± 2 degrees Centigrade for thermally treated cheeses. The cheese curds were kept in the brine for 1 minute. Next the brine was separated from the cheese curds which were formed in a known way.

**Claims**

1. Method for salting cheese characterized in that cheese curds are separated from whey and directed to a stream of brine being a solution of 6 to 20 per cent sodium chloride in water, the temperature of said brine being constant for a given cheese type and ranging within the limits from 35 up to 90 degrees Centigrade, said cheese curds being kept in said brine for a controlled period of time ranging from half a minute up to ten minutes, and next being separated from the brine and formed into suitable cheese bricks.

2. Device for salting cheese characterized by a curd separator (2), co-acting with the whey separator (3) and a curds charging hopper (5), provided with a pump (7) for cheese mass, connected via a salting time controller (8) to a tubular heater (9) and a brine separator (10), equipped with a return hopper, connected to a brine pump (11) and a cheese forming unit (12), the said brine pump (11) being connected to the said charging hopper (5).

3. Device according to Claim 2 characterized in that the tube for connecting the brine pump (11) to the charging hopper (5) has a branch terminating with a set of rinsing nozzles (4), whose outlets are directed towards the sieve of the whey separator (3).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 937 388 (KRAFT FOODS) <br> * Claims 1-4; page 4, lines 15-24; page 4, lines 66-107 * <br> --- | 1 | A 23 C 19/064 <br> A 01 J 25/00 |
| X | GB-A- 858 340 (W. TRIGGS) <br> * Claims 1,6,8,10; page 4, lines 43-110 * <br> --- | 1 | |
| A | DE-A-3 342 095 (A. SCHWARTE) <br> * Claims 1,6 * <br> --- | 1 | |
| A | EP-A-0 112 260 (CENTRE LAIT) <br> * Claims 1-4 * <br> ----- | 1 | |

TECHNICAL FIELDS SEARCHED (Int. Cl.4)

A 23 C
A 01 J

The present search report has been drawn up for all claims

| Place of search | Date of completion of the search | Examiner |
|---|---|---|
| THE HAGUE | 22-11-1988 | DESMEDT G.R.A. |